**Europäisches Patentamt**

**European Patent Office**

**Office européen des brevets**

(19)

(11) Veröffentlichungsnummer: **0 108 826**
**B1**

(12) # EUROPÄISCHE PATENTSCHRIFT

(45) Veröffentlichungstag der Patentschrift:
15.10.86

(51) Int. Cl.⁴: **A 24 F 15/10,** B 60 N 3/12

(21) Anmeldenummer: **82110536.8**

(22) Anmeldetag: **15.11.82**

(54) **Zigarettenspender mit elektrischem Anzünder.**

(43) Veröffentlichungstag der Anmeldung:
**23.05.84 Patentblatt 84/21**

(45) Bekanntmachung des Hinweises auf die Patenterteilung:
**15.10.86 Patentblatt 86/42**

(84) Benannte Vertragsstaaten:
**AT BE CH DE FR GB IT LI NL SE**

(56) Entgegenhaltungen:
**DE-A-2 104 358**
**FR-A-1 299 642**
**US-A-1 997 796**
**US-A-3 548 148**
**US-A-3 705 414**
**US-A-3 769 492**

(73) Patentinhaber: **System- Finanz**
**Anlagenberatungsgesellschaft m.b.H.,**
**Warwitzstraße 8, A-5020 Salzburg (AT)**
Patentinhaber: **Puskin, Pavel, Wiener**
**Bundesstrasse 15, A-4050 Traun (AT)**

(72) Erfinder: **Bajtala, Ladislav, Salzburgerstrasse 6/22,**
**A-4053 Haid (AT)**
Erfinder: **Puskin, Pavel, Wiener Bundesstrasse 15,**
**A-4050 Traun (AT)**

(74) Vertreter: **Berngruber, Otto, Dr. Dipl.- Chem.,**
**Patentanwälte Haft, Berngruber, Czybulka Hans-**
**Sachs- Strasse 5, D-8000 München 5 (DE)**

## Beschreibung

Diejenigen Kraftfahrer, die passionierte Raucher sind, wollen auch während der Fahrt nicht auf ihre Zigarette verzichten. Sie halten dann das Lenkrad mit der einen Hand und angeln mit der anderen Hand nach der Zigarettenpackung. Während dieser Tätigkeit gilt die Aufmerksamkeit des Fahrers nur zum Teil der Fahrbahn und der jeweiligen Verkehrssituation, während sich der Rest seiner Aufmerksamkeit auf die Suche nach der Zigarette und deren Loslösung aus der Packung richtet. Bei einer plötzlich auftretenden kritischen Verkehrslage ist der Fahrer somit nur mit einer Hand und der Hälfte seiner Aufmerksamkeit dabei. Es ist daher nicht verwunderlich, daß nach der Verkehrsstatistik sehr viele Unfälle dadurch zustande kommen, daß der Fahrer eines Kraftfahrzeuges im Unfallaugenblick durch das Angeln nach einer Zigarette abgelenkt war.

Wenn der Fahrer sich eine Zigarette geangelt hat, dann richtet sich seine Aufmerksamkeit darauf, den elektrischen Zigarettenanzünder zu suchen und dann den Anzünder zu der in den Mund gesteckten Zigarette zu führen. Vollends wird die Aufmerksamkeit in Anspruch genommen, wenn, was manchmal passiert, beim Anzünden Glut von der Zigarette auf die Kleidung des Fahrers, den Sitz oder auf den Boden fällt und dann der Fahrer damit beschäftigt ist, die Glut zu löschen. Wenn dem Fahrer eine gezündete Zigarette zugeführt werden würde, dann würde das zusätzlich in großem Maße zur Sicherheit des Fahrens beitragen.

Aus der deutschen Offenlegungsschrift 28 42 193 ist ein Zigarettenspender mit einem elektrischen Anzünder bekannt, der ein Trommelmagazin mit einem schachtförmigen Speicher aufweist, an dessen Unterseite eine um eine waagrechte Achse drehbare Trommel mit Längsnuten zur Aufnahme jeweils einer Zigarette vorgesehen ist. Unter der Trommel befindet sich eine Rinne nach Drehung der Trommel mit einem außen am Gehäuse angebrachten Handgriff fällt und dabei neben dem Glühkopf des Anzünders zu liegen kommt. An dem dem Glühkopf gegenüberliegenden Ende der Rinne ist die Spenderöffnung vorgesehen, aus der die Zigarette waagrecht herausgezogen wird.

Der bekannte, Zigarettenspender weist den Nachteil auf, daß die Zigaretten einzeln in das Trommelmagazin eingelegt werden müssen, was sehr zeitraubend ist. Auch liegt die Rinne bzw. die Spenderöffnung unter dem Gehäuse, so daß die Erfaßbarkeit der Zigarette bei der Entnahme aus der Spenderöffnung zu wünschen übrig läßt. Ferner ist kein ausreichender Kontakt zwischen der in der Rinne liegenden Zigarette und dem Glühkopf am Ende der Rinne sichergestellt. Auch ist der bekannte Zigarettenspender durch seine relativ große Höhe in dem Armaturenbrett eines Kraftfahrzeuges nur schwer unterzubringen.

Ein weiterer aus der deutschen Offenlegungsschrift 30 31 436 bekannter Zigarettenspender mit Anzünder zeichnet sich durch einen aufwendigen Mechanismus zum Anzünden und Ausstoßen der Zigaretten aus. Gleiches gilt für den aus der deutschen Offenlegungsschrift 28 12 457 bekannten Zigarettenspender, der sogar noch einen Elektromotor benötigt.

Aus der deutschen Offenlegungsschrift 2 104 358 ist ein Zigarettenspender gemäß dem Oberbegriff des Anspruchs I bekannt. Die Spenderlade ist dabei um eine im Abstand vor der Spenderöffnung angeordnete Achse verschwenkbar und der Speicherraum wird durch eine Schütte gebildet, die sich als geneigt angeordneter Boden bis zur Gehäuserückwand erstreckt. Bei dem bekannten Zigarettenspender muß eine Zigarette neben der anderen in den Speicherraum gelegt werden, und, sofern der Speicherraum für eine größere Anzahl von Zigaretten ausgelegt wird, weist der Zigarettenspender eine relativ große Tiefe auf.

Aus der US-Patentschrift 3 769 492 ist ein Zigarettenspender bekannt, bei dem der Speicherraum als sich von oben nach unten erstreckender S-förmiger Kanal oder als Trichter ausgebildet ist. Der Zigarettenspender weist dadurch eine relativ große Höhe auf. Bei dem trichterförmigen Speicherraum können sich ferner die Zigaretten bei gleichzeitigem Eintritt mehrerer Zigaretten in den Trichterhals verklemmen. Auch liegen die Zigaretten beim Anzünden waagrecht neben dem Glühkopf, so daß der Kontakt zwischen der jeweiligen Zigarette und dem Glühkopf zu wünschen übrig lassen kann.

Der Erfindung liegt die Aufgabe zugrunde, einen Zigarettenspender mit elektrischem Anzünder, insbesondere für Kraftfahrzeuge zu schaffen, der bei hoher Funktionssicherheit ein großes Speichervermögen und einen kompakten Aufbau aufweist. Dies wird erfindungsgemäß durch die im Anspruch 1 angegebenen Maßnahmen erreicht.

Nachstehend ist eine Ausführungsform des erfindungsgemäßen Zigarettenspenders anhand der beigefügten Zeichnung nähererläutert. Es zeigen:

Figur 1 eine Vorderansicht des Zigarettenspenders;

Figur 2 eine Draufsicht auf den aus dem Aufnahmegehäuse gezogenen Teil des Zigarettenspenders;

Figur 3 eine Seitenansicht des Teils gemäß Figur 2;

Figur 4 einen Schnitt entlang der Linie IV-IV in Figur 2;

Figur 5 einen Schnitt entlang der Linie V-V in Figur 2; und

Figur 6 einen Schnitt durch das Aufnahmegehäuse mit herausgezogenem Teil des Zigarettenspenders.

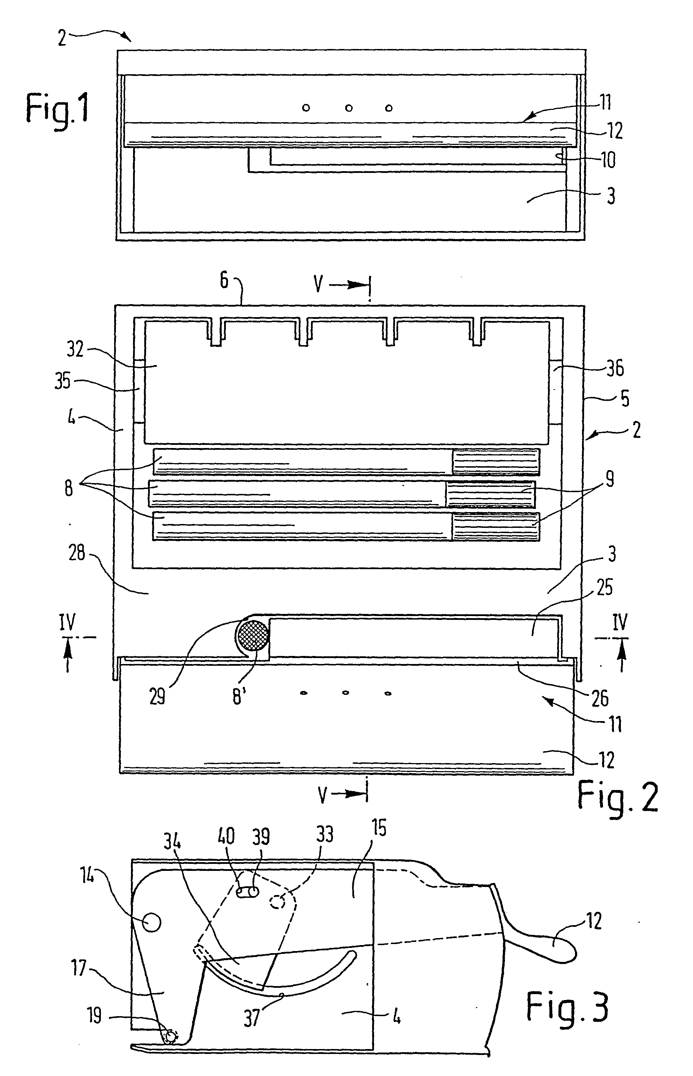

In Figur 1 bis 5 ist das Schubfachteil des Zigarettenspenders dargestellt, das in den oberen Abschnitt A des Aufnahmegehäuses 1 geschoben wird.

Das Schubfachteil besteht aus einem Gehäuse 2 mit einer vorderen Wand 3, Seitenwänden 4 und 5, einer Rückwand 6 und einem Boden 7.

Das Schubfachteil bzw. Gehäuse 2 bildet den Speicherraum zur Aufnahme der Zigaretten 8, die von oben lose, in paralleler Lage und, sofern es sich um Filterzigaretten handelt, mit allen Filtern 9 auf einer Seite eingelegt werden (Figur 2).

In der vorderen Wand 3 des Gehäuses 2 ist ein waagrechter Schlitz 10 vorgesehen, dessen Länge etwas größer als die Länge der Zigaretten 8 und dessen Breite etwas größer als die Breite der Zigaretten 8, jedenfalls kleiner als der doppelte Durchmesser einer Zigarette 8 ist.

Vor dem Schlitz bzw. der Spenderöffnung 10 ist eine aufund abbewegliche Spenderlade 11 mit einer Griffleiste 12 vorgesehen.

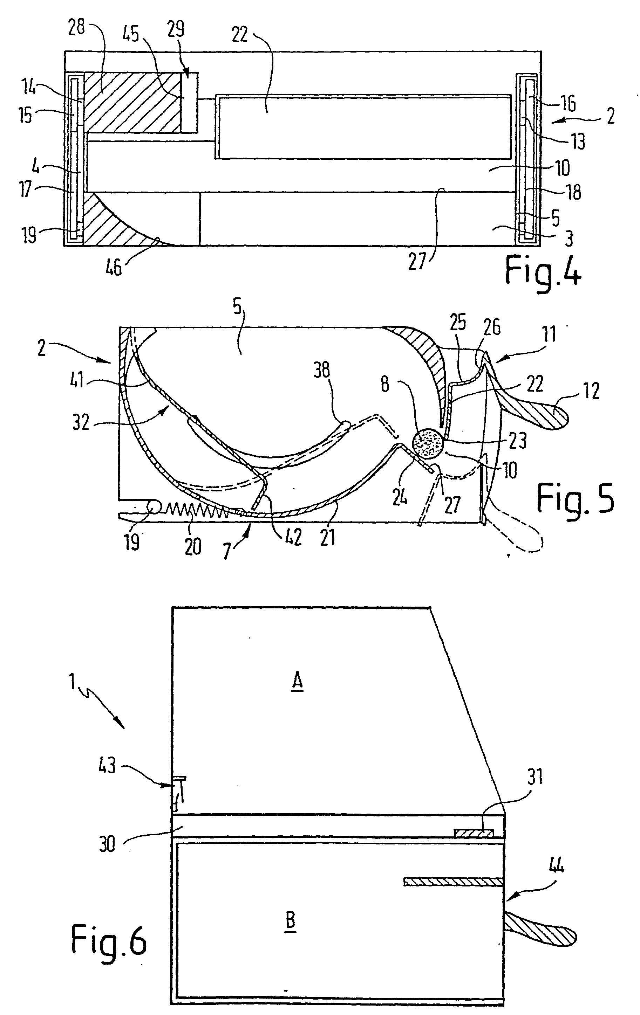

Die Spenderlade 11 ist um eine waagrechte dem rückwärtigen Bereich des Gehäuses 2 durch Lagerstellen 13, 14 an den Seitenwänden 4, 5 des Gehäuses gebildete Achse verschwenkbar angeordnet. Dazu ist die Spenderlade 11 über zwei Hebelarme 15, 16 mit ihrer Schwenkachse verbunden (Figur 3 und 4).

Die Spenderlade 11 ist nach oben federbelastet. Dazu weisen die beiden Hebelarme 15, 16 jeweils einen weiteren Hebelarm 17, 18 auf so daß zwei Winkelhebel gebildet werden, wobei die freien Enden der beiden weiteren Hebelarme 17, 18 mit einer sich hinter der Rückwand 6 des Gehäuses 2 erstreckenden Stange 19 verbunden sind.

An der Stange 19 greift an jedem Ende eine Zugfeder 20 an, die mit ihrem anderen Ende am gehäusefesten Teil 21 des Bodens 7 befestigt ist (Figur 5).

Die Spenderlade 11 ist mit einer Schließfläche 22 mit einer Schließkante 23 versehen, die unmittelbar an den Schlitz bzw. die Spenderöffnung 10 anschließt. In der in Figur 5 mit ausgezogenen Linien dargestellten oberen Endposition, die der Ruheposiiton der Spenderlade 11 bzw. der Ausgangsposition bei Betätigung der Spenderlade 11 entspricht, verschließt die Schließfläche 22 mit ihrer Schließkante 23 den oberen Teil des Schlitzes bzw. der Spenderöffnung 10, so daß die auf einer Schütte 24 des gehäusefesten Teils 21 des Bodens 7 befindliche Zigarette 8 nicht durch den Schlitz 10 hindurchtreten kann.

Die Spenderlade 11 weist ferner an ihrer Oberseite eine Zigarettenaufnahmefläche oder -mulde 25 auf, die an ihrer von dem Gehäuse 2 abgewandten, der Griffleiste 12 zugewandten Seite mit einer Auffangkante 26 versehen ist, die mit einem Abstand von dem Schlitz bzw. der Spenderöffnung 10 angeordnet ist, der etwas größer als der Durchmesser einer Zigarette 8, jedenfalls kleiner als der 1 1/2-fache Durchmesser einer Zigarette 8.

Wie der in Figur 5 punktiert dargestellten unteren Endposition der Spenderlade 11 zu entnehmen, ist bei einer nach unten gedrückten Spenderlade 11 der Schlitz bzw. die Spenderöffnung 10 freigegeben und die Zigarettenaufnahmefläche 25 unmittelbar unter der Unterkante 27 des Schlitzes bzw. der Spenderöffnung 10 angeordnet, so daß die Zigarette 8 auf die Aufnahmefläche 25 fällt.

An der vorderen Wand 3 des Gehäuses 2 ist oberhalb des Schlitzes bzw. der Spenderöffnung 10 ein Anschlag 28 befestigt, wie insbesondere aus Figur 2 und 4 ersichtlich. Wie Figur 2 zu entnehmen, ist der Anschlag 28 auf seiner der Zigarettenaufnahmefläche 25 der Spenderlade 11 zugewandten Seite mit einer Ausnehmung 29 versehen, die einen etwas größeren Querschnitt als die senkrecht in der Ausnehmung 29 angeordnete Zigarette 8' aufweist.

Auf der Oberseite eines Zwischenbodens 30 des Aufnahmegehäuses ist der Glühkopf 31 eines elektrischen Anzünders angebracht (Figur 6), und zwar genau unterhalb der Ausnehmung 29 mit der senkrecht angeordneten Zigarette 8' zwischen dem Anschlag 28 und der Aufnahmefläche 25 (Figur 2), wenn das Schubfachteil bzw. das Gehäuse 2 in den Abschnitt A des Aufnahmegehäuses 1 geschoben ist.

Die durch die nachstehend noch näher beschriebene Mechanik auf die Schütte 24 bewegten, von der Schütte 24 durch den Schlitz bzw. die Spenderöffnung 10 auf die Aufnahmefläche 24 bei heruntergedrückter Spenderlade 11 fallende Zigarette 8 kommt also mit ihrem vom Filter 9 abgewandten Ende unter dem gehäusefesten Anschlag 28 zu liegen.

Beim Loslassen der Spenderlade 11 bewegt sich dieselbe aufgrund ihrer Federbelastung nach oben und kippt so die mit dem einen Ende unter dem gehäusefesten Anschlag 28 liegende Zigarette 8' in die in Figur 2 dargestellte senkrechte Position in der Ausnehmung 29 mit nach oben ragendem Filter 9.

Da sich die Ausnehmung 28 vor der Vorderwand 3 des Gehäuses 2 befindet, also nach unten hin frei ist, fällt die Zigarette 8' dann nach unten auf den Glühkopf 31.

Um eine genaue senkrechte Positionierung der Zigarette 8' zu erreichen, erstrecken sich in Figur 4 dargestellte Führungsflächen 45 bzw. -kanten 46 an den der Ausnehmung 29 zugewandten Seiten des Anschlags 28 und der Zigarettenaufnahmefläche 25 nach unten.

Für die Mechanik zum Transport der Zigaretten 8 im Speicherraum unterhalb der Schütte 24 auf dieselbe ist der Boden 7 des Speicherraums bzw. Gehäuses 2 aus dem gehäusefesten Teil 21 und einem Schieber 32 gebildet.

Der Schieber 32 ist als Drehschieber ausgebildet. Die Lagerstellen 33 des Drehschiebers 32 sind außen an den beiden Seitenwänden 4 und 5 im oberen Bereich des Gehäuses 2 vorgesehen. Die Verbindung der Drehachse der beiden Lagerstellen 33 mit dem Drehschieber 32 in Speicherraum erfolgt über jeweils einen zwischen der Seitenwand 4, 5 und dem Hebelarm 15, 16 der Spenderlade 11 nach unten verlaufenden Hebelarm 34, von dessen unteren Ende ein Verbindungsarm 35, 36 durch eine kreisbogenförmige Ausnehmung 37, 38 in der Gehäuseseite 4 und 5 ragt, der an dem Drehschieber 32 befestigt ist.

Die Verschwenkung der Hebelarme 15, 16 und damit des Schiebers 32 erfolgt durch an den Hebelarmen 15, 16 vorgesehene Exzenter-Nocken 39, die jeweils in einer Längsausnehmung 40 in jeder der beiden Hebelarme 15, 16 der Spenderlade 11 eingreifen.

Bei unbetätigter Spenderlade 11 wird dabei der Exzenter-Nocken 39 nach oben gedrückt und damit der Schieber 32 in der in Figur 3 bzw. in Figur 5 mit ausgezogenen Linien dargestellten rückwärtigen Ruheposition gehalten.

Der in der Ruheposition des Schiebers 32 vor demselben angeordnete gehäusefeste Teil 21 des Bodens 7 ist konkav bzw. kreisbogenförmig ausgebildet, und zwar konzentrisch zur Drehachse des Schiebers 32.

Der Drehschieber weist an seinem radial äußeren, dem kreisbogenförmigen Bodenabschnitt zugewandten Ende einen sich im wesentlichen radial erstreckenden Schieberabschnitt 42 auf. Die Breite des Schieberabschnitts 42 entspricht etwa der Dicke einer Zigarette 8. Von den sich im wesentlichen radial erstreckenden Schieberabschnitt 42 erstreckt sich zur Rückwand 6 des Gehäuses 2 ein Bodenabschnitt 43.

Es ist ersichtlich, daß bei Herunterdrücken der Spenderlade 11 über die Längsausnehmung 40 am Hebelarm 15, 16 und den Exzenter-Nocken 39 am Hebelarm 34 der Schieber 32 zu der Schütte 24 verschwenkt wird, so daß wenigstens eine Zigarette 8 in die Schütte 24 gelangt.

Die Stange 19 zwischen den Hebelarmen 17 und 18 bewegt sich bei heruntergedrückter Spenderlade 11 nach rückwärts und betätigt einen Schalter 43 im rückwärtigen Bereich des Aufnahmegehäuses 1.

Bei Betätigung des Schalters 8 wird ein nicht dargestellter auf dem Zwischenboden 30 des Aufnahmegehäuses 1 vorgesehener elektronischer Stromkreis betätigt, der Spannung an den Glühkopf 31 legt und mit einem Zeitregler zusammenwirkt, der die Dauer des Anzündvorganges auf die erforderliche Zeit beschränkt. Die Beendigung des Anzündvorganges wird durch einen akustischen Signalgeber im elektronischen Stromkreis angezeigt.

Unterhalb des Zwischenbodens 30 ist im Abschnitt B des Aufnahmegehäuses 1 ein herausziehbarer Aschenbecher 44 vorgesehen.

Die ideale Anordnung des erfindungsgemäßen Zigarettenspenders in einem Kraftfahrzeug ist im Armaturenbrett. Die Vorderfront des Aufnahmegehäuses 1 mit dem herausziehbaren Schubladenteil bzw. Gehäuse 2 und dem Aschenbecher 44 befindet sich dann in der Ebene des Armaturenbrettes.

Mit dem erfindungsgemäßen Spender können grundsätzlich Zigaretten beliebigen Üuerschnitts und beliebiger Länge ausgegeben und angezündet werden, selbstverständlich auch Zigarillos und Zigarren. Bei serienmäßiger Herstellung wird man die Abmessungen so wählen, daß möglichst alle marktgängigen Zigarettensorten erfaßt werden.

**Patentansprüche**

1. Zigarettenspender mit elektrischem Anzünder, mit einem Gehäuse (2) mit einem Speicherraum für die Zigaretten (8), mit einer durch einen waagrechten Schlitz (10) gebildeten Spenderöffnung, vor der eine nach oben federbelastete Spenderlade (11) mit einer Schließkante (23) der Spenderöffnung und mit einer auf seiner Oberseite angeordneten Zigarettenaufnahmefläche (27) auf- und abbewegbar ist, mit einem gehäusefesten Anschlag (28) unmittelbar oberhalb und an einer Seite der Spenderöffnung (10), mit einer Ausnehmung (29) zwischen der Zigarettenaufnahmefläche (27) und dem Anschlag (28) und mit einem Glühkopf (31) des Anzünders unterhalb der Ausnehmung (29), wobei in dem Gehäuse (2) eine Schütte (24) vorgesehen ist, die sich von der unteren Kante der Spenderöffnung (10) nach oben in das Gehäuse (2) erstreckt, dadurch gekennzeichnet, daß die Schütte nur einen Teil des Bodens des Speicherraums bildet, dessen anderer Teil einen kreisbogenförmigen oder dgl. Abschnitt (21) aufweist, der sich seitlich der Schütte (24) von unten zum oberen Ende der Schütte hin erstreckt, so daß einige Zigaretten (8) auf diesem anderen Teil, aber unterhalb der Ebene der Schütte (24) angeordnet sind, und ein Schieber (32) vorgesehen ist, der bei Betätigung der Spenderlade (11) die im Speicherraum unterhalb der Schütte (24) angeordneten Zigaretten (8) auf die Schütte (24) fördert.

2. Zigarettenspender nach Anspruch 1 dadurch gekennzeichnet, daß das Gehäuse (2) als Schubfachteil ausgebildet wird, wobei der Glühkopf (31) des Anzünders am Aufnahmegehäuse (1) befestigt ist.

3. Zigarettenspender nach Anspruch 1 oder 2, dadurch gekennzeichnet, daß die Zigarettenaufnahmefläche (27) eine Auffangkante (26) aufweist, die mit einem Abstand von der Spenderöffnung (10) angeordnet ist, der weniger als das 1 1/2-fache der Dicke einer Zigarette ausmacht.

4. Zigarettenspender nach einem der Ansprüche 1 bis 3, dadurch gekennzeichnet, daß die Spenderlade (11) um eine waagrechte im rückwärtigen Bereich des Gehäuses (2) angeordnete Achse über zwei sichan den Gehäuseseitenwänden (4, 5),erstreckende Hebelarme (15, 16) verschwenkbar ist.

5. Zigarettenspender nach einem der vorstehenden Ansprüche, dadurch gekennzeichnet, daß der Schieber (32) als Drehschieber ausgebildet ist und der Boden des Speicherraumes den kreisbogenförmigen Abschnitt (21) aufweist, der konzentrisch zur Schwenkachse des Drehschiebers (32) verläuft.

6. Zigarettenspender nach einem der vorstehenden Ansprüche, dadurch gekennzeichnet, daß der Schieber (32) zumindest eine Exzenter-Nocken (39) aufweist, der in einer Längsausnehmung und einer der beiden Hebelarme (15, 16) der Spenderlade (11) eingreift.

7. Zigarettenspender nach Anspruch 5 oder 6, dadurch gekennzeichnet, daß die Lagerstellen (33) für den Drehschieber (32) außen an den Gehäuseseitenwänden (4, 5) und den Hebelarmen (15, 16) der Spenderlade (11) angeordnet sind, wobei der Drehschieber (32) mit den Lagerstellen (33) über zwei von den Lagerstellen sich außen an den Gehäuseseitenwänden (4, 5) sowie durch zur Drehschieberschwenkachse konzentrische kreisbogenförmige Ausnehmung (37, 38) in den Gehäuseseitenwänden (4, 5) in den Speicherraum erstreckenden am Drehschieber (32) befestigte Verbindungsarme (35, 36) verbunden ist.

8. Zigarettenspender nach einem der Ansprüche 5 bis 7, dadurch gekennzeichnet, daß der Drehschieber (32) an seinem radial äußeren, dem kreisbogenförmigen Bodenabschitt (21) benachbarten Ende einen sich im wesentlichen radial erstreckenden Schieberabschnitt (42) mit einer etwa dem Durchmesser einer Zigarette (8) entsprechenden Breite und einen sich von dem radialen Schieberabschnitt (42) wegerstreckenden Bodenabschnitt (41) aufweist, der sich zur Rückwand (6) des Gehäuses (2) erstreckt.

9. Zigarettenspender nach einem der Ansprüche 4 bis 8, dadurch gekennzeichnet, daß wenigstens einer der Hebelarme (15, 16) der Spenderlade (11) von einem Winkelhebel gebildet wird, und an dem Ende des von der Spenderlade (11) abgewandten Hebelarmes (17, 18) des Winkelhebels zur Federbelastung der Spenderlade (11) eine Feder (20) angreift, die mit ihrem anderen Ende am Gehäuse (2) befestigt ist.

10. Zigarettenspender nach Anspruch 9, dadurch gekennzeichnet, daß der von der Spenderlade (11) abgewandte Hebelarm (17, 18) des Winkelhebels den Schalter (41) für den elektrischen Anzünder betätigt.

## Claims

1. A cigarette dispenser with an electric lighter, comprising a housing (2) with a storage space for the cigarettes (8), a dispensing opening formed by a horizontal slot (10), in front of which an upwardly spring-loaded front portion (11) having a closing edge (23) of the dispensing opening and a cigarette receiving surface (27) disposed on its upper side is capable of moving up and down, a stop (28) fixed on the housing immediately above and on one side of the dispensing opening (10), a recess (29) between the cigarette receiving surface (27) and the stop (28), and a glow head (31) of the lighter below the recess (29), a feeder (24) being provided in the housing (2) which extends upwardly from the lower edge of the dispensing opening (10) into the housing (2), characterized in that the feeder forms only part of the bottom of the storage space, the other part having an arc-shaped or similar portion (21) extending downwardly on the side of the feeder (24) to the upper end of the feeder, so that a few cigarettes (8) are disposed on this other part but below the plane of the feeder (24), and a slide (32) is provided which, upon actuation of the front portion (11), conveys the cigarettes (8) disposed in the storage space below the feeder (24) onto the feeder (24).

2. The cigarette dispenser according to claim 1, characterized in that the housing (2) is designed as a drawer part, the glow head (31) of the lighter being mounted on the receiving housing (1).

3. The cigarette dispenser according to claim 1 or 2, characterized in that the cigarette receiving surface (27) has a collecting edge (26) spaced from the dispensing opening (10) at a distance constituting less than one and a half times the thickness of a cigarette.

4. The cigarette dispenser according to any of claims 1 to 3, characterized in that the front portion (11) is capable of being swivelled about a horizontal axis disposed in the rear area of the housing (2) via two lever arms (15, 16) extending on the side walls (4, 5) of the housing.

5. The cigarette dispenser according to any of the above claims, characterized in that the slide (32) is designed as a rotary slide and the bottom of the storage space has the arc-shaped portion (21) which extends concentrically to the swivelling axis of the rotary slide (32).

6. The cigarette dispenser according to any of the above claims, characterized in that the slide (32) has at least one eccentric cam (39) which engages a longitudinal recess in one of the two lever arms (15, 16) of the front portion (11).

7. The cigarette dispenser according to claim 5 or 6, characterized in that the bearings (33) for the rotary slide (32) are disposed on the outside on the side walls (4, 5) of the housing and the lever arms (15, 16) of the front portion (11), the rotary slide (32) being connected to the bearings (33) via two connecting arms (35, 36) mounted on the rotary slide (32) and extending into the storage space from the bearings on the outside on the side walls (4, 5) of the housing and through arc-shaped recess (37, 38) concentric to the swivelling axis of the rotary slide in the side walls (4, 5) of the housing.

8. The cigarette dispenser according to any of claims 5 to 7, characterized in that the rotary slide (32) has on its radially outer end adjacent the arc-shaped bottom portion (21) a slide portion (42) extending substantially radially having a width corresponding approximately to the diameter of a cigarette (8), and a bottom portion (41) extending away from the radial slide portion (42) and extending to the back wall (6) of the housing (2).

9. The cigarette dispenser according to any of claims 4 to 8, characterized in that at least one of the lever arms (15, 16) of the front portion (11) is formed by an angle lever, and a spring (20) attacks the end of the lever arm (17, 18) of the angle lever facing away from the front portion (11) to spring-load the front portion (11), said spring being mounted at its other end on the housing (2).

10. The cigarette dispenser according to claim 9, characterized in that the lever arm (17, 18) of the angle lever facing away from the front portion (11) actuates the switch (41) for the electric lighter.


## Revendications

1. Distributeur de cigarettes avec allumeur électrique, présentant une boîte (2) avec un réservoir pour les cigarettes (8), avec un orifice de distributeur réalisé par une fente horizontale (10), par devant lequel un élément frontal de distributeur (11) chargé par ressort, muni d'un bord de fermeture (23) pour l'orifice de distributeur et d'une surface de réception de cigarette (27) à sa surface supérieure, peut subir un mouvement vers le bas et vers le haut, avec une butée (28) solidaire à la boîte, se trouvant directement au-dessus et à côté de l'une des extrémités de l'orifice de distributeur (10), avec un creux (29) entre la surface de réception de cigarette (27) et la butée (28), et avec une culasse incandescente (31) de l'allumeur au-dessous du creux (29), une glissière (24) étant prévue dans la boîte (2), s'étendant du bord inférieur de l'orifice de distributeur (10) vers l'intérieur de la boîte (2), en montant, caractérisé en ce que la glissière ne représente qu'une partie du fond de réservoir, l'autre partie de celeu-ci présentant un segment formé en arc de cercle (21) ou pareil, s'étendant, à côté de la glissière (24), d'en bas jusqu'au bout supérieur de la glissière, de façon qu'il y a quelques cigarettes (8) disposées sur cette partie tout en restant au-dessous du niveau de la glissière (24), et qu'un poussoir (32) est prévu qui transporte les cigarettes (8) disposées dans le réservoir au-dessous de la glissière (24) sur la glissière (24) lorsque l'élément frontal de distributeur (11) est actionné.

2. Distributeur de cigarettes selon la revendication 1, caractérisé en ce que la boîte (2) est un élément tiroir, la culasse incandescente (31) de l'allumeur étant fixée au boitier récepteur (1).

3. Distributeur de cigarettes selon la revendication 1 ou 2, caractérisé en ce que la surface de réception de cigarette (27) présente un bord d'arrêt (26) disposé en une distance à l'orifice de distributeur (10) inférieure à 1,5 fois du diamètre d'une cigarette.

4. Distributeur de cigarettes selon l'une des revendications 1 à 3, caractérisé en ce que l'élément frontal de distributeur (11) est basculant, à l'intermédiaire de deux bras de levier (15, 16) s'étendant le long des parois latérales (4, 5) de la boîte, sur un axe horizontal dans la partie arrière de la boîte (2).

5. Distributeur de cigarettes selon l'une des revendications ci-dessus, caractérisé en ce que le poussoir (32) est un poussoir tournant et que le fond du réservoir présente un segment formé en arc de cercle (21) concentrique par rapport au pivot du poussoir tournant (32).

6. Distributeur de cigarettes selon l'une des revendications ci-dessus, caractérisé en ce que le poussoir (32) présente au moins une came d'excentrique (39) qui est en prise avec le creux longitudinal dans l'un des deux bras de levier (15, 16) de l'élément frontal de distributeur (11).

7. Distributeur de cigarettes selon la revendication 5 ou 6, caractérisé en ce que les points d'appui (33) pour le poussoir tournant (32) sont disposés au dehors sur les parois latérales (4, 5) de la boîte et aux bras de levier (15, 16) de l'élément frontal de distributeur (11), le poussoir tournant (32) étant relié aux points d'appui (33) à l'intermédiaire de deux bras de raccordement (35, 36) s'étendant à partir des points d'appui, au dehors, le long des parois latérales (4, 5) de la boîte, à travers les creux formés en arc de cercle (37, 38) concentriques par rapport au pivot du poussoir tournant qui se trouvent dans les parois latérales de la boîte (4, 5), et jusqu'à l'intérieur du réservoir où ils sont fixés au poussoir tournant (32).

8. Distributeur de cigarettes selon l'une des revendications 5 à 7, caractérisé en ce que le poussoir tournant (32) présente, à son extrémité radialement plus éloignée, voisine au segment du fond formé en arc de cercle (21), un segment de poussoir (42) s'étendant, pour l'essentiel, dans le sens radial, dont la largeur correspond à peu près au diamètre d'une cigarette (8) ainsiqu'un segment de fond (41) s'étendant vers la paroi arrière (6) de la boîte (2), à partir du segment de poussoir (42) radial.

9. Distributeur de cigarettes selon l'une des revendications 4 à 8, caractérisé en ce qu'au moins un des bras de levier (15,16) de l'élément frontal de distributeur (11) est un levier coudé, et que, afin de mettre l'élément frontal de distributeur (11) sous l'action d'un ressort, un ressort (20) est appliqué à l'extrémité du bras de levier (17, 18) plus éloigné, par rapport à l'élément frontal de distributeur (11), du levier coudé, ce ressort étant fixé, de son autre extrémité, à la boîte (2).

10. Distributeur de cigarettes selon la revendication 9, caractérisé en ce que le bras de levier (17, 18) plus éloigné, par rapport à l'élément frontal de distributeur (11), du levier coudé actionne l'interrupteur (41) pour l'allumeur électrique.

Fig.1

Fig. 2

Fig. 3

**Fig.4**

**Fig.5**

**Fig.6**